(19) Europäisches Patentamt
European Patent Office
Office européen des brevets

(11) **EP 4 358 224 A1**

(12) # EUROPEAN PATENT APPLICATION
published in accordance with Art. 153(4) EPC

(43) Date of publication:
**24.04.2024 Bulletin 2024/17**

(21) Application number: **21946093.8**

(22) Date of filing: **18.06.2021**

(51) International Patent Classification (IPC):
*H01M 10/0587* (2010.01)    *H01M 4/13* (2010.01)
*H01M 4/485* (2010.01)    *H01M 50/414* (2021.01)
*H01M 50/429* (2021.01)    *H01M 50/44* (2021.01)
*H01M 50/449* (2021.01)    *H01M 50/489* (2021.01)

(52) Cooperative Patent Classification (CPC):
H01M 50/411; H01M 4/13; H01M 4/134;
H01M 4/485; H01M 10/0431; H01M 10/0525;
H01M 10/0587; H01M 50/204; H01M 50/414;
H01M 50/429; H01M 50/4295; H01M 50/44;
H01M 50/449; H01M 50/489; Y02E 60/10;    (Cont.)

(86) International application number:
**PCT/JP2021/023248**

(87) International publication number:
**WO 2022/264419 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KABUSHIKI KAISHA TOSHIBA**
**Minato-ku**
**Tokyo 105-0023 (JP)**

(72) Inventors:
• **MURASHI, Yasuaki**
**Tokyo 105-0023 (JP)**
• **NIIDA, Yoshihiro**
**Tokyo 105-0023 (JP)**
• **WATANABE, Yuki**
**Tokyo 105-0023 (JP)**
• **NAMIKI, Yusuke**
**Tokyo 105-0023 (JP)**
• **SHIKOTA, Masataka**
**Tokyo 105-0023 (JP)**

(74) Representative: **Hoffmann Eitle**
**Patent- und Rechtsanwälte PartmbB**
**Arabellastraße 30**
**81925 München (DE)**

(54) **ELECTRODE GROUP, BATTERY, AND BATTERY PACK**

(57)    According to one embodiment, provided is an electrode group having a flat structure including a flat portion, that includes a wound body having a wound structure of a flat shape and a fixing tape wound one lap or more around an outer periphery thereof. The wound body is configured of a stack wound with a winding number of 50 turns or more so that a center of the wound body is positioned along a first direction, where the stack includes a positive electrode that includes a positive electrode active material-containing layer, a negative electrode that includes a negative electrode active material-containing layer, and a separator. For a thickness T of the flat structure in a second direction intersecting a principal surface in the flat portion, a swollen-state thickness $T_S$ in a state of being impregnated with propylene carbonate and a dry thickness $T_D$ in a dry state satisfy a relationship of $1.01 < T_S/T_D < 1.02$. At both ends in the first direction, one of the positive electrode active material-containing layer and the negative electrode active material-containing layer protrudes from an end of the other by a protrusion width W within a range of 0.4 mm or more and 1 mm or less.

**(Cont. next page)**

EP 4 358 224 A1

F I G. 1

(52) Cooperative Patent Classification (CPC): (Cont.)
Y02P 70/50

## Description

FIELD

Embodiments of the present invention relate to an electrode group, battery, and battery pack.

BACKGROUND

Lithium ion secondary batteries are widely used in portable devices, automobiles, storage batteries, and the like. Lithium ion secondary batteries are power storage devices whose market is expected to grow.

A typical lithium-ion secondary battery includes electrodes including a positive electrode and a negative electrode, and an electrolyte. An electrode of a lithium ion secondary battery includes a current collector and an active material-containing layer provided on a principal surface of the current collector. The active material-containing layer of the electrode is, for example, a layer composed of active material particles, an electro-conductive agent, and a binder, and is a porous body capable of holding an electrolyte. When the lithium ion secondary battery is charged or discharged, lithium ions move back and forth as carrier ions of charges between the active material-containing layer of the positive electrode and the active material-containing layer of the negative electrode in accordance with an inflow and outflow of electric current, whereby electric power can be stored and released.

A lithium ion secondary battery using lithium titanate (LTO) for a negative electrode of the lithium ion secondary battery is excellent in input/output performance and life performance but has a rather small capacity. In order to improve the battery capacity, measures such as increasing the electrode area contributing to charge and discharge and thickening the electrode are conceivable. From the viewpoint of maintaining the input/output performance, which is one merit of using LTO for the negative electrode, the former measure of increasing the electrode area contributing to charge and discharge is preferable because the latter measure of thickening the electrode increases the resistance of the battery. Increasing the electrode area contributing to charge and discharge is possible through making the separator thinner or reducing the clearance between the positive electrode and the negative electrode. The clearance between the positive electrode and the negative electrode herein refers to a proportional area of a portion not facing the other electrode serving as the counter electrode, among the principal surface of the active material-containing layer of each of the positive electrode and the negative electrode. The portion of the active material-containing layer that does not face the counter electrode hardly contributes to charge and discharge.

CITATION LIST

PATENT LITERATURE

1. International Publication No. 2019/187130

SUMMARY

TECHNICAL PROBLEM

Objects of the present invention are to provide an electrode group capable of realizing a battery and a battery pack having a high capacity and high vibration resistance performance, and to provide a battery and a battery pack having a high capacity and high vibration resistance performance.

SOLUTION TO PROBLEM

According to one embodiment, provided is an electrode group having a flat structure including a flat portion, that includes a wound body having a wound structure of a flat shape and a fixing tape wound one lap or more around an outer periphery thereof. The wound body is configured of a stack wound with a winding number of 50 turns or more so that a center of the wound body is positioned along a first direction, where the stack includes a positive electrode that includes a positive electrode active material-containing layer, a negative electrode that includes a negative electrode active material-containing layer, and a separator. For a thickness T of the flat structure in a second direction intersecting a principal surface in the flat portion, a swollen-state thickness Ts in a state of being impregnated with propylene carbonate and a dry thickness $T_D$ in a dry state satisfy a relationship of $1.01 < T_S/T_D < 1.02$. At both ends in the first direction, one of the positive electrode active material-containing layer and the negative electrode active material-containing layer protrudes from an end of the other by a protrusion width W within a range of 0.4 mm or more and 1 mm or less.

According to another embodiment, a battery is provided. The battery includes the above electrode group and an electrolyte.

According to still another embodiment, a battery pack is provided. The battery pack includes the above battery.

BRIEF DESCRIPTION OF THE DRAWINGS

FIG. 1 is a perspective view schematically showing an example of an electrode group according to an embodiment.
FIG. 2 is a cross-sectional view taken along an imaginary plane 11 shown in FIG. 1.
FIG. 3 is a partially unwound perspective view schematically showing an example of a wound body included in the electrode group according to the embodiment.
FIG. 4 is a cross-sectional view taken along line IV-IV' of the wound body shown in FIG. 3.
FIG. 5 is a schematic cross-sectional view showing an innermost circumferential portion of the electrode group according to the embodiment.
FIG. 6 is a schematic cross-sectional view of an example of a battery according to an embodiment.
FIG. 7 is an enlarged cross-sectional view of section A in FIG. 6.
FIG. 8 is an exploded perspective view schematically showing another example of the battery according to the embodiment.
FIG. 9 is a partially cutaway view of yet another example of the battery according to the embodiment.
FIG. 10 is an exploded perspective view schematically showing an example of a battery pack according to an embodiment.
FIG. 11 is a block diagram showing an electric circuit of the battery pack shown in FIG. 10.

DETAILED DESCRIPTION

By reducing the clearance between the positive electrode and the negative electrode, it is possible to reduce portions which can be considered "dead weight" for hardly contributing to charge and discharge in each active material-containing layer. Reducing the clearance can thus improve the battery capacity. In turn, however, with a small clearance, a short circuit is more likely to occur when the arrangement between the positive and negative electrodes is shifted due to an external stimulus such as vibration.

Embodiments will be explained below with reference to the drawings. Structures common to all embodiments are represented by the same symbols and redundant explanations will be omitted. In addition, each drawing is a schematic view for explaining the embodiments and for promoting the understanding thereof. Though there are parts different from an actual device in shape, dimension, ratio, and the like, these structural designs may be properly changed taking the following explanations and known technologies into consideration.

[First Embodiment]

The electrode group according to the first embodiment includes a wound body and a fixing tape. The electrode group includes a wound body and a fixing tape, and has a flat structure including a flat portion. The wound body has a wound structure of flat shape. The flat-shaped wound structure is configured of a stack including a positive electrode, a negative electrode and a separator that is wound so that a center of the wound body is positioned along a first direction. The stack is wound with a winding number of 50 turns or more. The fixing tape is wound one lap or more around an outer periphery of the wound body. A thickness T of the flat structure of the electrode group in a second direction intersecting a principal surface in the flat portion satisfies a relationship of $1.01 < T_S/T_D < 1.02$. Here, $T_S$ is a swollen-state thickness in the second direction for a state where the electrode group is impregnated with propylene carbonate, and $T_D$ is a dry thickness in the second direction for a dry state. At both ends in the first direction of the electrode group, one of the positive electrode active material-containing layer and the negative electrode active material-containing layer protrudes from an end of the other by a protrusion width W within a range of 0.4 mm or more and 1 mm or less.

The electrode group according to the embodiment may be an electrode group for a battery. Examples of the battery that may include the electrode group according to the embodiment include secondary batteries such as a lithium ion secondary battery. The battery includes, for example, a nonaqueous electrolyte battery that contains a nonaqueous electrolyte as an electrolyte.

When such an electrode group is installed in a battery containing an electrolyte, the electrolyte may be held by the electrode group. When the electrode group having the above-described structure is impregnated with an electrolyte, the electrode group swells after the battery is charged. The swelling of the electrode group brings the winding structure into a tightly wound state, thereby improving the vibration resistance of the electrode group. In the electrode group having the vibration resistance improved in this manner, an occurrence of a short circuit can be suppressed even if a clearance between the positive and negative electrodes is reduced. As a result, the capacity of the battery can be increased and also have the vibration resistance performance be improved.

The electrode group has a flat structure. The flat structure includes a wound body and a fixing tape wound around the wound body. The wound body has a flat wound structure. The flat wound structure is, for example, a structure obtained by spirally winding a stack including a positive electrode, a negative electrode, and a separator, and pressing the stack into a flat shape. Alternatively, the flat wound structure may be a structure in which a stack including a positive electrode, a negative electrode, and a separator is wound into a flat shape. The separator may be interposed between the positive electrode active material-containing layer of the positive electrode and the negative electrode active material-containing layer of the negative electrode.

The positive electrode includes a positive electrode active material-containing layer. The positive electrode may further include a positive electrode current collector. The positive electrode active material-containing layer may be provided on the positive electrode current collector.

The positive electrode current collector has one or more principal surface, and may have, for example, a thin plate shape with a first principal surface and a second principal surface positioned on the reverse side thereto. The positive electrode active material-containing layer may be provided on one or more principal surface of the positive electrode current collector. For example, the positive electrode active material-containing layer may be provided on one of the principal surfaces of the positive electrode current collector having a thin plate shape. Alternatively, the positive electrode active material-containing layer may be provided on both the obverse and reverse principal surfaces (both the first principal surface and the second principal surface) of the positive electrode thin plate-shaped current collector. That is, the positive electrode active material-containing layer may be provided on one or both of the surfaces of the current collector.

The positive electrode current collector may include a portion having no positive electrode active material-containing layer provided on any principal surface thereof. Of the positive electrode current collector, the portion not having the positive electrode active material-containing layer provided thereon may function as a positive electrode current collecting tab. For example, a portion formed along one side of the positive electrode current collector and not holding any positive electrode active material-containing layer may function as the positive electrode current collecting tab. The positive electrode current collecting tab is not limited to the side that does not hold the positive electrode active material-containing layer in the current collector. For example, plural strip-formed portions projecting from one side of the positive electrode current collector may be used as current collecting tabs. The positive electrode current collecting tab may be made of the same material as the positive electrode current collector. Alternatively, a positive electrode current collecting tab may be prepared separately from the positive electrode current collector, and connected to at least one end face of the positive electrode current collector by welding or the like.

The negative electrode includes a negative electrode active material-containing layer. The negative electrode may further include a negative electrode current collector. The negative electrode active material-containing layer may be provided on the negative electrode current collector.

The negative electrode current collector may include a portion having no negative electrode active material-containing layer provided on any principal surface thereof. Of the negative electrode current collector, the portion not having the negative electrode active material-containing layer provided thereon may function as a negative electrode current collecting tab. For example, a portion formed along one side of the negative electrode current collector and not holding any negative electrode active material-containing layer may function as the negative electrode current collecting tab. The negative electrode current collecting tab is not limited to the side that does not hold the negative electrode active material-containing layer in the current collector. For example, plural strip-formed portions projecting from one side of the negative electrode current collector may be used as current collecting tabs. The negative electrode current collecting tab may be made of the same material as the negative electrode current collector. Alternatively, a negative electrode current collecting tab may be prepared separately from the negative electrode current collector, and connected to at least one end face of the negative electrode current collector by welding or the like.

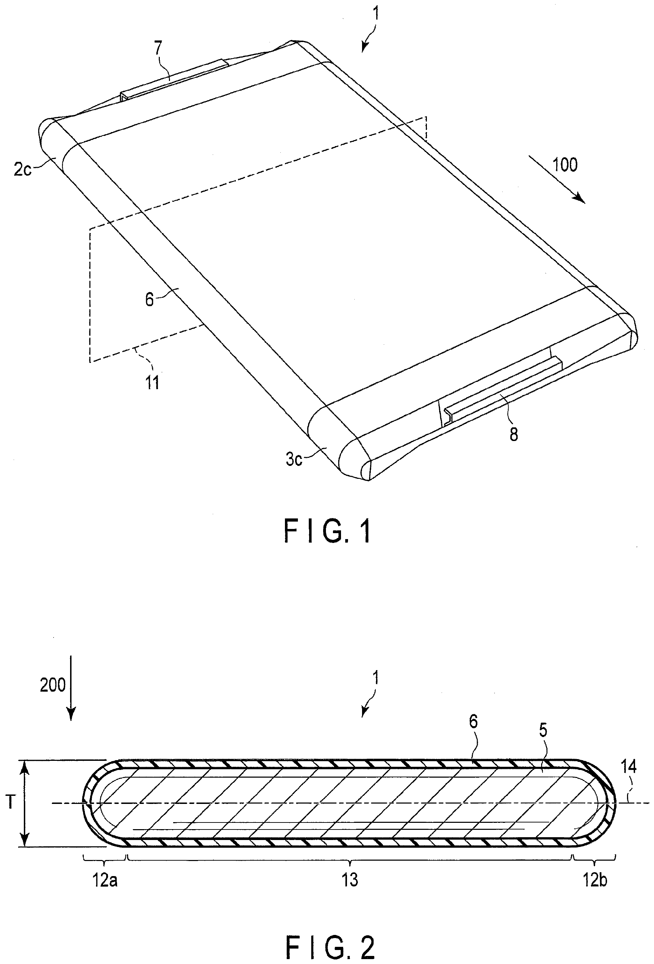

An electrode group according to the embodiment will be described with reference to FIGS. 1 to 5.

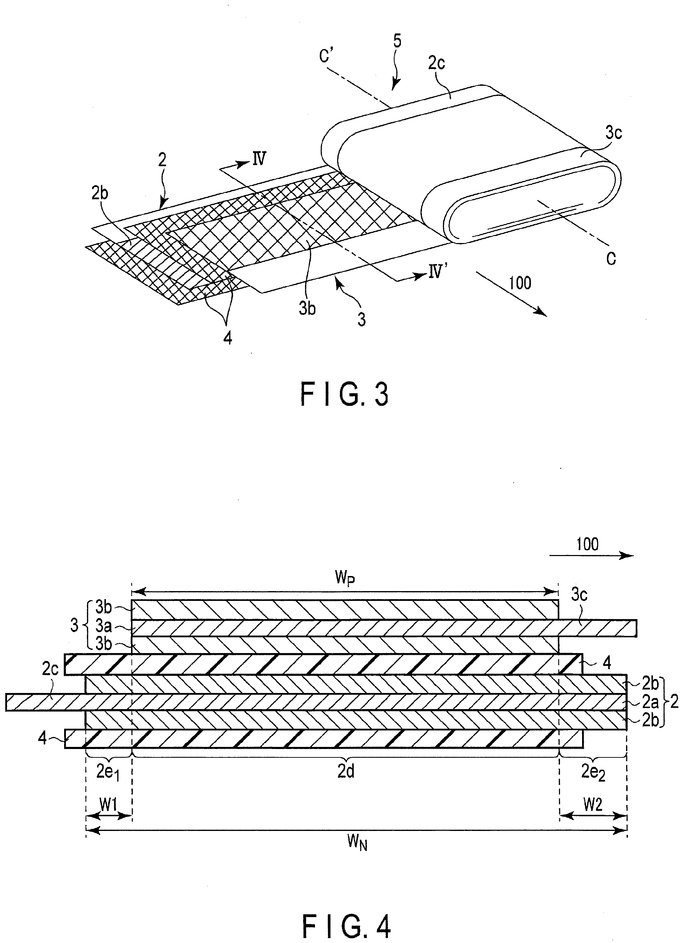

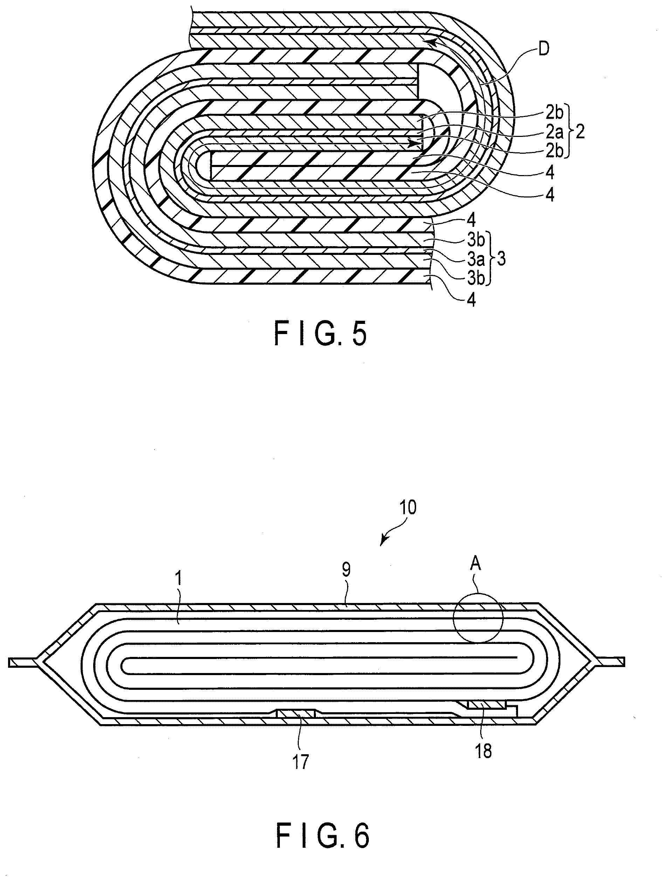

FIG. 1 is a perspective view schematically showing an example of an electrode group according to the embodiment. FIG. 2 is a cross-sectional view taken along an imaginary plane 11 shown in FIG. 1. FIG. 3 is a partially unwound perspective view schematically showing an example of a wound body included in an electrode group according to the embodiment. FIG. 4 is a cross-sectional view taken along line IV-IV' of the wound body shown in FIG. 3. FIG. 5 is a schematic cross-sectional view showing an innermost circumferential portion of an electrode group according to the embodiment.

FIGS. 1 and 2 schematically show an electrode group 1 that includes a wound body 5 having a flat wound structure and a fixing tape 6 covering the periphery of the winding of the wound body 5. FIGS. 3 and 4 schematically show the wound body 5 in a partially unwound state and with the fixing tape 6 omitted. FIG. 5 schematically shows a cross-section in the vicinity of the winding center of the wound body 5 included in the electrode group 1.

The illustrated electrode group 1 includes a positive electrode 3, a negative electrode 2, a separator 4, and a fixing tape 6. Each of the positive electrode 3, the negative electrode 2, and the separator 4 has a band shape. The positive electrode 3, the negative electrode 2, and the separator 4 constitute the wound body 5 shown in FIGS. 2 and 3. As shown in FIG. 3, the wound body 5 has a structure in which a stack that includes the positive electrode 3, the negative electrode 2, and the separator 4 disposed therebetween is wound in a flat shape. This wound structure is formed by winding the stack around an imaginary line C-C' parallel to a first direction 100 intersecting the longitudinal direction of the stack having a band shape before winding.

The fixing tape 6 is wound around the outer periphery of the wound body 5 at least once, as shown in FIG. 2. The fixing tape 6 functions as a winding affixation tape for preventing the wound body 5 from being unwound. For example, the fixing tape 6 covers the outermost periphery of the wound body 5 except for the positive electrode current collecting tab 3c and the negative electrode current collecting tab 2c, as shown in FIG. 1.

FIG. 2 shows a cross-section of the winding of the electrode group 1, perpendicular to the first direction 100. The dashed-dotted line 14 shown in FIG. 2 indicates a position along which the longest straight line from one end to the other end of the electrode group 1 lies in the cross-section of the winding. The electrode group 1 has a flat structure including, at both ends along the longest straight line, a curved surface portion 12a and a curved surface portion 12b where the stack constituting the wound body 5 is curved in a curved surface shape, and including a flat portion 13 between the curved surface portions 12a and 12b where the stack is flat or substantially flat. As shown in FIG. 2, the flat structure of the electrode group 1 is flat or substantially flat in a second direction intersecting the first direction 100. In a state where the fixing tape 6 is omitted, the curved surface portion 12a and the curved surface portion 12b and the flat portion 13 of the flat structure can be regarded as curved surface portions and a flat portion of the wound body 5, respectively.

The thickness T of the flat portion 13 in the second direction 200 intersecting the principal surface of the electrode group 1 differs between a state in which the electrode group 1 is impregnated with an organic solvent such as propylene carbonate (PC) and a dry state in which the electrode group 1 does not hold the solvent. In other words, the electrode group 1 swells due to a solvent, and the thickness T changes between the state where the electrode group 1 is swollen due to the solvent and the dry state. A swollen-state thickness $T_S$ in a swollen state and a dry-state thickness $T_D$ in a dry state satisfy a relationship, $1.01 < T_S/T_D < 1.02$. In the electrode group 1 in which the ratio $T_S/T_D$ exceeds 1.01, when the electrode group 1 is installed in a battery, the electrode group 1 swells due to impregnation with an electrolyte, and the effect of improving the vibration resistance due to the above-described tightening of winding can be expected. The electrode group 1 in which the ratio $T_S/T_D$ is less than 1.02 can exhibit a high capacity.

The ratio $T_S/T_D$ varies depending on the configuration of the separator 4 used in the electrode group 1 and the configurations of the positive electrode 3 and the negative electrode 2. For example, the material of the separator 4, the fiber diameter and the type of fibers constituting the separator 4, and the thickness of the separator 4 can affect the ratio $T_S/T_D$. In addition, the thicknesses of the positive electrode 3 or the negative electrode 2 and the number of windings (the number of turns) of the wound body 5 can affect the ratio $T_S/T_D$.

As the configuration of the separator 4, adopted is one with which the thickness of the separator 4 increases due to swelling as compared with a dry state, when the separator 4 is impregnated with an organic solvent. Details of such a configuration will be described later. The ratio $T_S/T_D$ can be expected to become greater than 1, when using the separator 4 configured to swell when impregnated with an organic solvent. In the electrode group 1 using the separator 4 that swells, the change in the ratio $T_S/T_D$ shows the following tendency. The ratio $T_S/T_D$ tends to increase as the thickness of the separator 4 increases. Conversely, the ratio $T_S/T_D$ tends to decrease as the thickness of the positive electrode 3 or the negative electrode 2 increases. The ratio $T_S/T_D$ tends to increase as the number of times the stack is wound (the number of turns) in the wound body 5 increases.

The thickness T of the electrode group 1 in the second direction 200 includes the thickness of the wound body 5 and the thickness of the fixing tape 6 wound around the outer periphery of the wound body 5 (including the thicknesses of the portions disposed on both upper and lower sides along the second direction 200). In other words, the thickness T is a thickness of the flat structure, including the wound body 5 and the fixing tape included in the electrode group 1. The second direction 200 intersects the longest straight line from one end to the other end in the cross-section of the winding of the electrode group 1.

As shown in FIG. 4, the positive electrode 3 includes a positive electrode current collector 3a, a positive electrode active material-containing layer 3b, and a positive electrode current collecting tab 3c. The positive electrode current collector 3a has a band shape. The positive electrode active material-containing layer 3b is supported on the positive electrode current collector 3a. The positive electrode current collecting tab 3c is provided on one side of the positive electrode current collector 3a, for example, at an end parallel to the long side of the ban shape.

The positive electrode current collecting tab 3c may be part of the positive electrode current collector 3a. For example, the portion of the positive electrode current collector 3a that does not support the positive electrode active material-containing layer 3b may be used as the positive electrode current collecting tab 3c. In other words, the positive electrode current collecting tab 3c may protrude from an end of the positive electrode active material-containing layer 3b.

The negative electrode 2 includes a negative electrode current collector 2a and a negative electrode active material-containing layer 2b. The negative electrode current collector 2a has a band shape. The negative electrode active material-containing layer 2b is supported on the negative electrode current collector 2a. A negative electrode current collecting tab 2c is provided on one side of the negative electrode current collector 2a, for example, at an end parallel to the long side of the band shape.

The negative electrode current collecting tab 2c may be part of the negative electrode current collector 2a. For example, the portion of the negative electrode current collector 2a that does not support the negative electrode active material-containing layer 2b may be used as the negative electrode current collecting tab 2c. In other words, the negative electrode current collecting tab 2c may protrude from an end of the negative electrode active material-containing layer 2b.

In the electrode group 1, the positive electrode active material-containing layer 3b of the positive electrode 3 and the negative electrode active material-containing layer 2b of the negative electrode 2 face each other with the separator 4 interposed therebetween. The positive electrode current collecting tab 3c protrudes further than the negative electrode active material-containing layer 2b and the separator 4 toward one side along the imaginary line C-C' corresponding to the axis of the spiral formed by winding the stack. The negative electrode current collecting tab 2c protrudes further toward the opposite side than the positive electrode active material-containing layer 3b and the separator 4. Therefore, in the electrode group 1, the positive electrode current collecting tab 3c wound in a flat spiral shape is positioned at a first end surface intersecting with the imaginary line C-C. The negative electrode current collecting tab 2c wound in a flat spiral shape is positioned at a second end surface intersecting with the imaginary line C-C' on the opposite side of the electrode group 1. In this manner for the illustrated electrode group 1, the positive electrode current collecting tab 3c is positioned on the opposite side of the wound stack from the negative electrode current collecting tab 2c. The positive electrode current collecting tab 3c and the negative electrode current collecting tab 2c may be arranged at the same end surface of the wound stack.

As shown in FIG. 4 for this example, a first width $W_P$ of the positive electrode active material-containing layer 3b is smaller than a second width $W_N$ of the negative electrode active material-containing layer 2b. The first width $W_P$ is a width that the positive electrode active material-containing layer 3b spans in the first direction 100 (lateral direction in FIG. 4) parallel to the winding axis of the stack (imaginary line C-C' in FIG. 2) . Likewise, the second width $W_N$ is a width that the negative electrode active material-containing layer 2b spans in the first direction 100.

The first width $W_P$ of the positive electrode active material-containing layer 3b is narrower than the second width $W_N$ of the negative electrode active material-containing layer 2b. Therefore, the entire region of the positive electrode active material-containing layer 3b along the first direction overlaps the negative electrode active material-containing layer 2b. The second width $W_N$ of the negative electrode active material-containing layer 2b is wider than the first width $W_P$ of the positive electrode active material-containing layer 3b. Therefore, a part of the negative electrode active material-containing layer 2b protrudes further outward in the width direction than the end of the positive electrode active material-containing layer 3b. In other words, a part of regions of the negative electrode active material-containing layer 2b along the first direction overlaps the positive electrode active material-containing layer 3b, and the other region does not overlap the positive electrode active material-containing layer 3b. Regions of the negative electrode active material-containing layer 2b that do not overlap the positive electrode active material-containing layer 3b are arranged at both ends in the width direction with the region overlapping the positive electrode active material-containing layer 3b interposed therebetween. The negative electrode active material-containing layer 2b protrudes further outward in both directions parallel to the winding axis of the wound body 5 (both directions along the first direction 100) than the positive electrode active material-containing layer 3b.

The positive electrode active material-containing layer 3b faces the negative electrode active material-containing layer 2b over the entire first width $W_P$ with the separator 4 interposed therebetween. In contrast, the negative electrode active material-containing layer 2b includes a portion facing the positive electrode active material-containing layer 3b with the separator 4 interposed therebetween and a portion not facing the positive electrode active material-containing layer 3b.

The negative electrode active material-containing layer 2b includes a facing portion 2d corresponding to the portion facing the positive electrode active material-containing layer 3b in the middle along the first direction 100. That is, the facing portion 2d is a portion of the negative electrode active material-containing layer 2b that overlaps the positive electrode active material-containing layer 3b in the planar direction.

The negative electrode active material-containing layer 2b includes a first non-facing portion $2e_1$ corresponding to the portion not facing the positive electrode active material-containing layer 3b at one end of the second width $W_N$, and a second non-facing portion $2e_2$ corresponding to the portion not facing the positive electrode active material-containing layer 3b at the other end of the second width $W_N$. The first non-facing portion $2e_1$ and the second non-facing portion $2e_2$ correspond to the portions of the negative electrode active material-containing layer 2b that protrude further outward than the ends of the positive electrode active material-containing layer 3b at both sides in the first direction 100. That is, the non-facing portions are regions of the negative electrode active material-containing layer 2b that do not overlap the positive electrode active material-containing layer 3b in the planar direction.

Both the protrusion width W1 that the first non-facing portion $2e_1$ protrudes along the first direction 100 and the protrusion width W2 that the second non-facing portion $2e_2$ protrudes along the first direction 100 are within a range of 0.4 mm or more and 1 mm or less. The protrusion widths W1 and W2 may be equal to or different from each other. The sum between the protruding width W1 of the first non-facing portion $2e_1$ and the protruding width W2 of the second non-facing portion $2e_2$ is equal to the difference between the second width $W_N$ of the negative electrode active material-containing layer 2b and the first width $W_P$ of the positive electrode active material-containing layer 3b. The protrusion widths W1 and W2 at the both ends are collectively referred to as "protrusion widths W". The protrusion width W corresponds to the clearance between the positive electrode 3 and the negative electrode 2.

Herein, the example in which the first width $W_P$ of the positive electrode active material-containing layer 3b is smaller than the second width $W_N$ of the negative electrode active material-containing layer 2b is illustrated, but the electrode group according to the embodiment is not limited to this example. That is, the first width $W_P$ of the positive electrode active material-containing layer 3b may be larger than the second width $W_N$ of the negative electrode active material-containing layer 2b. Although not illustrated, in this case, the negative electrode active material-containing layer 2b faces the positive electrode active material-containing layer 3b across the separator 4 over the entire second width $W_N$, and the positive electrode active material-containing layer 3b includes a portion facing the negative electrode active material-containing layer 2b across the separator 4 and portions not facing the negative electrode active material-containing layer 2b. Portions of the positive electrode active material-containing layer 3b that do not face the negative electrode active material-containing layer 2b protrude from both end portions of the negative electrode active material-containing layer 2b in the first direction 100 by a protrusion width W (protrusion width W1 and protrusion width W2) within the range of 0.4 mm or more and 1 mm or less in the first direction 100.

When the protrusion width W is 0.4 mm or more in the electrode group 1 which is tightly wound due to swelling, occurrence of a short circuit due to vibration is suppressed. When the protrusion width W is 1 mm or less, a high battery capacity can be exhibited.

The number of windings of the stack in the wound body 5 is at least 50 turns. By including 50 turns or more of winding, the above-described effect of improving vibration resistance performance due to winding tightness of the wound body is exhibited. The number of windings referred to herein is based on either the positive electrode 3 or the negative electrode 2. Specifically, a portion in which the electrode serving as the starting point makes one lap around the winding center (for example, a portion along the imaginary line C-C') up to where it overlaps itself is counted as one turn. For example, the portion from the end portion at the innermost circumference of the negative electrode 2 to the portion where the negative electrode 2 is wound once, which is indicated by the double-headed arrow D in FIG. 5, corresponds to one turn of winding of the stack in the case where the negative electrode 2 serves as a starting point. In this example, the negative electrode 2 is selected as the electrode serving as the starting point on the center side of the wound body, but the positive electrode 3 may be selected instead. Note that the cross-section shown in FIG. 5 may be parallel to the cross-section shown in FIG. 2. That is, FIG. 5 may be a cross-sectional view perpendicular to the first direction 100 shown in FIG. 1. The end portion of the innermost periphery of the negative electrode 2 (and that of the positive electrode 3) may be an end portion along the first direction 100.

As shown in FIG. 1, when the electrode group 1 is installed in a battery, a positive electrode lead 8 and a negative electrode lead 7 may be connected to the electrode group 1. The positive electrode lead 8 is electrically connected to the positive electrode current collecting tab 3c. The negative electrode lead 7 is electrically connected to the negative electrode current collecting tab 2c.

Hereinafter, the negative electrode, the positive electrode, the separator, and the fixing tape will be described in more detail.

(Negative Electrode)

The negative electrode includes a negative electrode active material-containing layer. As mentioned above, the negative electrode may further include a negative electrode current collector onto which the negative electrode active material-containing layer is supported.

The negative electrode active material-containing layer may contain a negative electrode active material. The negative electrode active material-containing layer may contain a binder, an electro-conductive agent, or both the binder and electro-conductive agent, in addition to the negative electrode active material.

As the negative electrode active material, for example, a metal, metal alloy, metal oxide, metal sulfide, metal nitride, graphitic material, carbonaceous material, and the like may be used. As the metal oxide, for example, a compound containing titanium, such as monoclinic titanium dioxide (for example, $TiO_2(B)$) and a lithium titanium composite oxide may be used. Examples of the metal sulfide include, titanium sulfide such as $TiS_2$, molybdenum sulfide such as $MoS_2$, and iron sulfide such as $FeS$, $FeS_2$, and $Li_vFeS_2$ (subscript v is $0.9 \leq v \leq 1.2$). Examples of the graphitic material and carbonaceous material include natural graphite, artificial graphite, coke, vapor-grown carbon fiber, mesophase pitch-based carbon fiber, spherical carbon, and resin-fired carbon. Note, that it is also possible to use plural of different negative electrode active materials in mixture.

A specific example of the compound containing titanium may be a lithium titanium oxide having a spinel structure such as, for example, spinel lithium titanate represented by $Li_{4+w}Ti_5O_{12}$, where $0 \leq w \leq 3$. Spinel lithium titanate has electrical conductivity in a state in which lithium is inserted ($w > 0$), and the electrical conductivity increases as the amount of inserted lithium increases.

More specific examples of the lithium titanium composite oxide include lithium titanium composite oxides like monoclinic niobium titanium composite oxide and orthorhombic titanium-containing composite oxide.

An example of the monoclinic niobium titanium composite oxide include a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. The respective subscripts in the composition formula are $0 \leq x \leq 5$, $0 \leq y < 1$, $0 \leq z < 2$, and $-0.3 \leq \delta \leq 0.3$. A specific example of monoclinic niobium titanium composite oxide is $Li_xNb_2TiO_7$ ($0 \leq x \leq 5$).

Another example of monoclinic niobium titanium composite oxide is a compound represented by $Li_xTi_{1-y}M3_{y+z}Nb_{2-z}O_{7-\delta}$. Here, M3 is at least one selected from Mg, Fe, Ni, Co, W, Ta, and Mo. The respective subscripts in the composition formula are $0 \leq x \leq 5$, $0 \leq y < 1$, $0 \leq z < 2$, and $-0.3 \leq \delta \leq 0.3$.

Examples of orthorhombic titanium-containing composite oxide include a compound represented by $Li_{2+a}M4_{2-b}Ti_{6-c}M5_dO_{14+\sigma}$. Here, M4 is at least one selected from the group consisting of Sr, Ba, Ca, Mg, Na, Cs, Rb and K. M5 is at least one selected from the group consisting of Zr, Sn, V, Nb, Ta, Mo, W, Y, Fe, Co, Cr, Mn, Ni and Al. The respective subscripts in the composition formula are, $0 \leq a \leq 6$, $0 \leq b < 2$, $0 \leq c < 6$, $0 \leq d < 6$, and $-0.5 \leq \sigma \leq 0.5$. A specific example of the orthorhombic titanium-containing composite oxide is $Li_{2+a}Na_2Ti_6O_{14}$ ($0 \leq a \leq 6$).

As the negative electrode active material, an oxide of titanium having little expansion and contraction of crystal structure upon charge and discharge is preferably used. The negative electrode active material more preferably includes lithium titanate expressed by $Li_4Ti_5O_{12}$ characterized by a distortion-less property, where the crystal structure neither expands nor contracts upon charge and discharge. When an active material that expands or contracts a little upon charge and discharge is used as the negative electrode active material, the winding-tightening effect due to swelling of the electrode group is hardly impaired.

The binder can bind the negative electrode active material and the negative electrode current collector. Examples of the binder include polytetrafluoroethylene (PTFE), polyvinylidene fluoride (PVdF), fluororubber, styrene-butadiene rubber (SBR), polypropylene (PP), polyethylene (PE), a binder having an acrylic copolymer as a main component, and carboxymethyl cellulose (CMC). As the binder, one among the above materials may be selected, or two or more among the above materials may be selected. The binder is not limited to the above materials.

The electro-conductive agent is added to improve current collection performance of the negative electrode and to suppress the contact resistance between the negative electrode active material and the negative electrode current collector. Examples of the electro-conductive agent include acetylene black, ketjen black, furnace black, carbon black, graphite, carbon nanotube, carbon fiber, and the like. As the electro-conductive agent, one among the above materials may be selected, or two or more among the above materials may be selected. The electro-conductive agent is not limited to the above materials.

The negative electrode active material, electro-conductive agent, and binder in the negative electrode active material-containing layer are preferably blended in proportions of 70% by mass or more and 96% by mass or less, 2% by mass or more and 20% by mass or less, and 2% by mass or more and 10% by mass or less, respectively. When the amount of electro-conductive agent is 2% by mass or more, the current collection performance of the negative electrode active material-containing layer can be improved. When the amount of binder is 2% by mass or more, binding between the negative electrode active material-containing layer and negative electrode current collector can be made high, and excellent cycling performances can be expected. On the other hand, an amount of each of the electro-conductive agent and binder is preferably 16% by mass or less, in view of increasing the capacity.

Foils including metals such as aluminum and copper may be used as the negative electrode current collector. Examples of the foils including metals include not only metal foils but also alloy foils such as a foil made of an aluminum alloy.

Desirably, the negative electrode has a thickness of 80 μm or less. The thickness referred to herein is a thickness of the negative electrode in a direction intersecting the first direction in the wound body. The thickness of the negative electrode may be, for example, a thickness including the negative electrode active material-containing layer and the negative electrode current collector along the stacking direction of the negative electrode current collector and the negative electrode active material-containing layer. The thickness as used herein refers to the thickness of the negative electrode in a completely discharged state. The fully discharged state is, for example, a state of charge (SOC) of 0%. Although there is no substantial difference in the thickness of the negative electrode between a state containing a liquid or gel such as an electrolyte or an organic solvent and a dry state, the thickness is measured in a dry state from the viewpoint of ease of handling, as described later.

The negative electrode may be fabricated, for example, by the following procedure. First, a slurry is prepared by introducing the negative electrode active material, electro-conductive agent, and binder into an appropriate solvent. As the solvent, for example, N-methylpyrrolidone (NMP) may be used. This slurry is applied onto the surface of the negative electrode current collector, and the coat is dried. The slurry may be applied only onto one principal face of the negative electrode current collector. Alternatively, the slurry may be applied onto both of one principal face and the other principal face on the reverse side of the negative electrode current collector. The dried coat is pressed to obtain negative electrode active material-containing layer having a desired density. Thereby, the negative electrode is finished.

(Positive Electrode)

The positive electrode includes a positive electrode active material-containing layer. As mentioned above, the positive electrode may further include a positive electrode current collector onto which the positive electrode active material-containing layer is supported.

The positive electrode active material-containing layer contains a positive electrode active material. The positive electrode active material-containing layer may further contain an electro-conductive agent and a binder, as necessary.

While the positive electrode active material is not particularly limited, an active material with little volume change upon charge and discharge is preferably used. By using such a positive electrode active material, the winding-tightening effect due to swelling of the electrode group is hardly impaired even when charging and discharging are repeated.

Examples of the positive electrode active material include lithium-containing nickel-cobalt-manganese oxides (for example, $Li_{1-p}Ni_{1-q-r-s}Co_qMn_rM6_sO_2$, where in the formula, M6 is one or more selected from the group consisting of Mg, Al, Si, Ti, Zn, Zr, Ca and Sn, and $-0.2 \leq p \leq 0.5$, $0 < q \leq 0.5$, $0 < r \leq 0.5$, $0 \leq s < 0.1$, and $q + r + s < 1$), lithium-containing cobalt oxides (for example, $LiCoO_2$), manganese dioxide, lithium-manganese composite oxides (for example, $LiMn_2O_4$ and $LiMnO_2$), lithium-containing nickel oxides (for example, $LiNiO_2$), lithium-containing nickel-cobalt oxides (for example, $LiNi_{0.8}Co_{0.2}O_2$), lithium-containing iron oxides (for example, $LiFePO_4$), vanadium oxides including lithium, chalcogen compounds such as titanium disulfide and molybdenum disulfide, and the like. The species of positive electrode active material may be one species or two or more species.

The binder can bind the positive electrode active material and the positive electrode current collector. Examples of the binder include polytetrafluoroethylene (PTFE), polyvinylidene fluoride (PVdF), fluororubber, styrene-butadiene rubber (SBR), polypropylene (PP), polyethylene (PE), a binder having an acrylic copolymer as a main component, and carboxymethyl cellulose (CMC). As the binder, one among the above materials may be selected, or two or more among the above materials may be selected. The binder is not limited to the above materials.

The electro-conductive agent is added to improve current collection performance of the positive electrode and to suppress the contact resistance between the positive electrode active material and the positive electrode current collector. Examples of the electro-conductive agent include acetylene black, ketjen black, furnace black, carbon black, graphite, carbon nanotube, carbon fiber, and the like. As the electro-conductive agent, one among the aforementioned materials may be selected, or two or more among the aforementioned materials may be selected. The electro-conductive agent is not limited to the above materials.

A blending proportion of the positive electrode active material, electro-conductive agent, and binder in the positive electrode active material-containing layer is preferably within ranges of 75% by mass or more and 96% by mass or less of the positive electrode active material, 3% by mass or more and 20% by mass or less of the electro-conductive agent, and 1% by mass or more and 7% by mass or less of the binder.

Foils including metals such as aluminum and copper may be used as the positive electrode current collector. Examples of the foils including metals include not only metal foils but also alloy foils such as a foil made of an aluminum alloy.

Desirably, the positive electrode has a thickness of 80 um or less. The thickness referred to herein is a thickness of the positive electrode in a direction intersecting the first direction in the wound body. The thickness of the positive electrode may be, for example, a thickness including the positive electrode active material-containing layer and the positive electrode current collector along the stacking direction of the positive electrode current collector and the positive electrode active material-containing layer. The thickness as used herein refers to the thickness of the positive electrode in a completely discharged state. The fully discharged state is, for example, a state of charge (SOC) of 0%. Although there is no substantial difference in the thickness of a positive electrode between a state containing a liquid or a gel such as an electrolyte or an organic solvent and a dry state, the thickness is measured in a dry state from the viewpoint of ease of handling, as described later.

The positive electrode may be fabricated, for example, by the following procedure. First, a slurry is prepared by introducing the positive electrode active material, electro-conductive agent, and binder into an appropriate solvent. As the solvent, for example, N-methylpyrrolidone (NMP) may be used. This slurry is applied onto the surface of the positive electrode current collector, and the coat is dried. The slurry may be applied only onto one principal face of the positive electrode current collector. Alternatively, the slurry may be applied onto both of one principal face and the other principal face on the reverse side of the positive electrode current collector. The dried coat is pressed to obtain positive electrode active material-containing layer having a desired density. Thereby, the positive electrode is finished.

(Separator)

The separator is made of an insulating material and can prevent electrical contact between a positive electrode and a negative electrode. Preferably, the separator is made of a material through which the electrolyte and/or carrier ions (such as Li ions) can pass, or has a shape through which the electrolyte and/or carrier ions can pass.

In the electrode group according to the embodiment, the separator swells due to permeation of an organic solvent. Whether or not a separator swells by being impregnated with an organic solvent is affected by the configuration of the separator, such as the material of the separator, the fiber diameter and the type of fibers constituting the separator, and the thickness of the separator (thickness in a dry state) . For example, an A-type separator having a configuration shown in Table 1 below (a configuration in a dry state) swells when immersed in an organic solvent, and the thickness of the A-type separator increases from 10 $\mu$m in a dry state to 10.5 um. The A-type separator is a composite of a substrate containing polyethylene terephthalate (PET) fibers and a cellulose nonwoven fabric. On the other hand, the B-type separator having the configuration shown in Table 1 does not swell even when impregnated with an organic solvent.

[Table 1]

| [Table 1] | Material | Porosity [%] | Thickness [$\mu$m] | Basis weight [g/m$^2$] | Density [g/cm$^3$] | Tensile Strength [kN/m] | Airtightness [sec/100 mL] |
|---|---|---|---|---|---|---|---|
| A-type Separator (swells) | PET fiber Substrate + Cellulose Nonwoven fabric | 61 | 10 | 6 | 0.6 | 0.26 | 27 |
| B-Type Separator (does not swell) | Cellulose Nonwoven fabric | 62 | 10 | 6 | 0.6 | 0.55 | 139 |

A method of measuring each item (porosity, thickness, basis weight, density, tensile strength, and airtightness) of the configuration of the separators shown in Table 1 will be described later.

Examples of the material of the fiber constituting the separator include, aside from PET and cellulose given above, polyolefin such as polyethylene and polypropylene, polyester, polyvinyl alcohol, polyamide, polytetrafluoroethylene, and vinylon.

The separator preferably has a thickness of 15 $\mu$m or less in a dry state.

The number of separators included in the wound body may be one. Alternatively, two or more separators may be included in the wound body.

(Fixing Tape)

The fixing tape is provided on the outer periphery of the wound body, and functions as a winding affixation tape for preventing unwinding of the stack constituting the wound body (the stack of the positive electrode, the negative electrode, and the separator) to maintain the wound state.

An example of the substrate of the fixing tape is a film made of polypropylene (PP) having a thickness of 20 $\mu$m. By using the fixing tape in which the material of the substrate is a PP film that does not exhibit elasticity, the function of winding affixation of the wound body can be suitably exhibited, and the winding-tightening effect upon swelling of the wound body can be promoted.

The fixing tape makes one or more laps around the outer periphery of the wound body. At least a part of the lapped-around fixing tape may overlap, and the overlapping portion may be positioned on the curved surface portion, for example.

Preferably, the fixing tape covers a portion of the negative electrode active material-containing layer and/or the positive electrode active material-containing layer exposed on the outer peripheral surface of the wound body. When the fixing tape covers a wide range of the outer peripheral surface of the wound body, the effect of tightening the wound body at the time of swelling is promoted.

<Measurement Method>

A method for examining details of the electrode group, such as the thickness T (the swollen-state thickness $T_S$ and the dry-state thickness $T_D$) of the electrode group, will be described below. When the electrode group to be examined is included in a battery, the electrode group is taken out from the battery and subjected to pretreatment. When examining individual members included in the electrode group, such as the electrodes and the separators, the electrodes and the separators are separated from the electrode group. For example, the electrode group incorporated in the non-aqueous electrolyte battery is pretreated by the following procedure.

First, the nonaqueous electrolyte battery is discharged to an SOC (state of charge) of 0%, i.e., a depth of discharge (DOD) of 100%. Subsequently, the nonaqueous electrolyte battery whose battery state of charge has reached 0% SOC is disassembled in a glove box filled with argon, and the electrode group to be measured is taken out from the nonaqueous electrolyte battery. Next, the taken-out electrode group is washed with, for example, methyl ethyl carbonate (MEC). The washed electrode group is then dried under an atmosphere of 25°C and a gauge pressure of -90 Pa. When examining individual members included in the electrode group, each member is separated from the dried electrode group. Hereinafter, an electrode to be measured is simply referred to as an "electrode", without distinguishing between a positive electrode and a negative electrode.

(Thickness T of Electrode Group)

The thickness T (the swollen-state thickness $T_S$ and the dry-state thickness $T_D$) in the second direction of the electrode group obtained by the pretreatment can be measured as follows.

When measuring the swollen-state thickness Ts in a state impregnated with propylene carbonate (PC), first, the dried electrode group is immersed in PC for one minute or more. In a state where a load of $160 \pm 20$N is applied to the electrodes drawn up from the PC, the thicknesses T in the second direction are measured with a digital microgauge. The direction in which the load is applied is the above-described second direction. In other words, a load is applied in such a manner that the front and back principal surfaces of the flat portion of the electrode group having a flat structure are pressed towards each other. The thickness T in the second direction is measured at nine points selected discretionarily, and the average value is adopted as the swollen-state thickness $T_S$.

When measuring the dry thickness $T_D$ in the dry state, the electrode group impregnated with PC is dried again, and then the thickness is measured. Alternatively, the electrode group dried by the pretreatment is directly subjected to the thickness measurement. The thicknesses T of the electrode group in the dry state in the second direction is also measured with a digital microgauge while applying a load of $160 \pm 20$ N in the second direction. The thickness T in the second direction is measured at nine points selected discretionarily, and the average value is adopted as the dry-state thickness $T_D$.

When the position of the overlapping portion of the fixing tape overlaps the flat portion, either a region including the overlapping portion of the fixing tape or a region not including the overlapping portion is discretionarily selected, and the thickness T is measured at nine measurement points in the selected region. However, the selection should be consistent between the swollen-state thickness $T_S$ and the dry-state thickness $T_D$.

(Number of Windings in Wound body)

In the wound body, the number of times (number of turns) that the stack including each of the electrodes and the separator is wound can be determined as follows.

In the electrode group after the pretreatment, the first direction is specified based on the winding direction of the wound body. A cross-section of the positive and negative electrodes and the separator is examined at an end surface intersecting the first direction. When it is difficult to examine the positive and negative electrodes and the separator at the end surface of the electrode group, the electrode group may be cut to expose a cut surface intersecting the first direction, and the cut surface may be examined.

In the cross-section intersecting the first direction, a portion from the center of winding to a portion where the electrode serving as the starting point makes one lap around the center of winding and overlaps is counted as one turn, and the number of turns up to the outer periphery of the wound body is counted. Either the positive electrode or the negative electrode is discretionarily selected as the electrode serving as the starting point.

(Thickness of Electrode)

Thickness measurement can be performed on the electrode obtained by the above pretreatment, in the following manner. The dried electrode is measured with a digital microgauge. An average value of nine points selected discretionarily in the short-hand direction among the dimensions of the electrode is adopted as the thickness of the electrode.

For example, the direction perpendicular to the principal surface of the active material-containing layer or current collector may be the short-hand direction, namely, the thickness direction.

(Composition of Electrode Active Material)

The composition of the active material (active material-containing layer and active material-containing layer) contained in the active material-containing layer (positive electrode active material-containing layer and negative electrode active material-containing layer) can be examined as follows. The electrode obtained by the pretreatment is washed and dried again. The active material-containing layer is scraped out from the dried electrode using, for example, a spatula, and the binder and the electro-conductive agent are removed by an acid heating treatment. The sample thus obtained is subjected to inductively coupled plasma (ICP) emission spectrometry. The elements to be measured are Li, Al, Mn, Ba, Ca, Ce, Co, Cr, Cu, Fe, Hf, K, La, Mg, Na, Ni, Pb, Si, Ti, Y, Zn and Zr. The overall composition of the electrode active material can be identified by calculating the mole fraction of each element from the measurement results.

Furthermore, the crystal structure of the active material can be examined by X-ray diffraction (XRD) measurement. XRD measurement is performed on the dried electrode. The range of the diffraction angle (2θ) is set to be from 10° to 90°, and the X-ray diffraction intensity is measured every 0.02°. An XRD measurement result is thus obtained. On the other hand, based on the result of the composition identification by the ICP analysis, a pattern of a unique peak of the active material estimated from the composition of the active material is estimated from the database. The crystal structure of the positive electrode active material contained in the positive electrode layer can be identified by comparing the estimated X-ray pattern with the actually measured X-ray pattern. The composition of the negative electrode active material can also be identified by performing the same measurement.

If the active material-containing layer contains plural species of electrode active materials, the actually measured X-ray pattern obtained by the XRD measurement contains peaks derived from the plural species of active materials. A peak derived from an active material may or may not overlap with a peak derived from another active material. In the case where the peaks do not overlap with each other, the composition and the mixing ratio of each active material included in the electrode can be determined by the XRD measurement and the ICP analysis.

On the other hand, when the peaks overlap each other, the composition and mixing ratio of each active material contained in the active material-containing layer are determined by scanning electron microscope (SEM) observation, energy dispersive X-ray spectroscopy (EDX), and electron energy-loss spectroscopy (EELS) analysis. Specific procedures of the determination are as follows.

First, a piece of about 2 cm × 2 cm is cut out from the dried electrode with a cutter or the like. The cross section of the cut piece is irradiated with argon ions accelerated at an acceleration voltage of 2 kV to 6 kV to obtain a flat cross section. Next, the composition of several active material particles included in the cross section of the electrode is analyzed using SEM equipped with EDX and EELS. In the EDX, elements from B to U can be quantitatively analyzed. Li can be quantitatively analyzed by EELS. Thus, the composition of each active material contained in the active material-containing layer can be known. Then, the mixing ratio of the active materials in the electrode can be determined from the composition of the entire electrode active material and the composition of each active material.

(Thickness of Separator)

Thickness measurement can be performed on the separator obtained by the above pretreatment, in the following manner. The dried separator is measured with a digital microgauge. An average value of nine points selected discretionarily in the short-hand direction among the dimensions of the separator is adopted as the thickness of the separator. For example, the direction perpendicular to the principal surface of the separator may be the short-hand direction, namely, the thickness direction.

(Vacancy of Separator)

The vacancy of the separator can be determined, for example, by mercury porosimetry.

The measurement sample is fed into a measurement analyzer. Examples of the measuring apparatus include AutoPore IV 9510 manufactured by Micromeritics Instruments Corporation. When performing the measurement using this device, the dried separator is cut into a size of about 50 mm to 100 mm square, and the cut piece is folded and inserted into the sample cell of this device, so that the pore diameter distribution can be measured.

The pore specific volume $V_P$ (cm³/g) is calculated from the pore diameter distribution measured under such conditions, and the vacancy $\varepsilon$ (%) is calculated by the following formula (1) or (2) based on the sample mass W (g) and the sample volume V (cm³) (longitudinal × lateral × thickness).

[Math 1]

$$\varepsilon = V_p \times W \times 1\,0\,0 / V \qquad (1)$$

[Math 2]

$$\varepsilon = \frac{100V_P W}{V} \qquad (2)$$

Here the sample volume V ($cm^3$) is calculated from the longitudinal dimension (cm), the lateral dimension (cm), and the thickness (cm) of the sample.

(Basis Weight of Separator)

The basis weight ($g/m^2$) of the separator can be measured by the method specified in Japanese Industrial Standard JIS P8124:2011.

(Separator)

The density ($g/cm^3$) of the separator can be calculated based on the thickness and basis weight of the separator obtained by the above-described method.

(Tensile Strength of Separator)

The tensile strength of the separators is based on the tensile strength specified in JIS P8113:2006. Specifically, the value of the tensile strength determined by the measurement method specified in JIS P8113:2006 is recorded as the tensile strength.

(Airtightness of Separator)

The airtightness of the separators is based on the air permeation resistance measured based on the Gurley method specified in JIS P8117:2009. Specifically, the airtightness of the separators referred to herein is expressed as an air resistance obtained by the Gurley method specified in JIS P8117:2009. A high numerical value of the air permeation resistance (sec/100 mL) according to the Gurley method means a high airtightness.

The electrode group according to the first embodiment includes a wound body having a flat wound structure and a fixing tape. The electrode group includes a flat portion and has a flat structure including the wound body and the fixing tape. The wound body is composed of a stack including a positive electrode, a negative electrode and a separator wound with a winding number of 50 turns or more so that a center of the wound body is positioned along a first direction. The positive electrode includes a positive electrode active material-containing layer, and the negative electrode includes a negative electrode active material-containing layer. The fixing tape is wound once or more around an outer periphery of the wound body. For a thickness T in a second direction intersecting a principal surface in the flat portion of the flat structure, a ratio $T_S/T_D$ of a swollen-state thickness $T_S$ of the electrode group in a state impregnated with propylene carbonate to a dry thickness $T_D$ of the electrode group in a dry state is greater than 1.01 and less than 1.02. At both ends in the first direction of the electrode group, one of the positive electrode active material-containing layer and the negative electrode active material-containing layer protrudes from an end of the other. The protrusion width W is within a range of 0.4 mm or more and 1 mm or less. The electrode group can provide a battery and battery pack with high capacity and high vibration resistance.

[Second Embodiment]

The battery according to the second embodiment includes the electrode group according to the first embodiment and an electrolyte. At least part of the electrolyte is held in the electrode group.

Two or more electrode groups may be included in one battery. All of the two or more electrode groups preferably satisfy the configuration of the first embodiment.

The battery may further include a container member that houses the electrode group and the electrolyte, for example.

The battery may further include a negative electrode terminal electrically connected to the negative electrode and a positive electrode terminal electrically connected to the positive electrode. The negative electrode terminal may be connected to the negative electrode via a negative electrode lead. The positive electrode terminal may be connected to the positive electrode via a positive electrode lead. The electrode lead (positive electrode lead or negative electrode lead) may be joined to plural current collecting tabs that are bundled together.

The battery according to the embodiment may be, for example, a lithium ion secondary battery. The battery includes, for example, nonaqueous electrolyte batteries containing nonaqueous electrolyte(s) as the electrolyte.

Hereinafter, the electrolyte, the container member, the negative electrode terminal, and the positive electrode terminal will be described in detail.

[Electrolyte]

An electrolyte of a form that can be impregnated into the electrode group is preferably used as the electrolyte. As such an electrolyte, for example, a liquid nonaqueous electrolyte or gel nonaqueous electrolyte may be used. The liquid nonaqueous electrolyte is prepared by dissolving an electrolyte salt as solute in an organic solvent.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), and lithium trifluoromethanesulfonate ($LiCF_3SO_3$). The electrolyte salt may be used singularly, or a mixture of two or more may be used.

The concentration of the electrolyte salt, that is the amount of dissolved electrolyte salt with respect to the organic solvent, is preferably within the range of 0.5 mol/L or more and 3 mol/L or less. When the concentration of the electrolyte salt is too low, sufficient ion conductivity may not be obtained. On the other hand, when the concentration is too high, the electrolyte salt may not be fully dissolved.

Examples of the organic solvent include ethylene carbonate (EC), propylene carbonate (PC), butylene carbonate (BC), dimethyl carbonate (DMC), diethyl carbonate (DEC), and ethyl methyl carbonate (EMC), $\gamma$-butyrolactone ($\gamma$-GBL), sulfolane (SL), acetonitrile (AN), 1,2-diemthoxy ethane, 1,3 dimethoxy propane, dimethyl ether, tetrahydrofuran (THF), and 2-methyl tetrahydrofuran (2-MeTHF). The organic solvent may be used singularly, or a mixture of two or more may be used.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions or a polymer solid electrolyte may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it. When the polymer solid electrolyte is used alone, the polymeric material with the electrolyte salt dissolved there in is impregnated into the electrode group, and then solidified.

In addition to the above, an inorganic solid electrolyte may be further used together. The inorganic solid electrolyte is a solid substance having Li ion conductivity.

[Container member]

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, button-shaped, and the like. The container member may be appropriately selected depending on battery size and use of the battery.

[Negative Electrode Terminal]

The negative electrode terminal may be made of a material that is electrochemically stable at the Li absorption-release potential of the abovementioned negative electrode active material, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce contact resistance between the negative electrode terminal and the negative electrode current collector.

For the negative electrode lead, a material that can be used for the negative electrode terminal may be used. In order to reduce the contact resistance, the materials of the negative electrode terminal, the negative electrode lead, and the negative electrode current collector are preferably the same.

[Positive Electrode Terminal]

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

For the positive electrode lead, a material that can be used for the positive electrode terminal may be used. In order to reduce the contact resistance, the materials of the positive electrode terminal, the positive electrode lead, and the positive electrode current collector are preferably the same.

Next, the battery will be more specifically described with reference to the drawings.

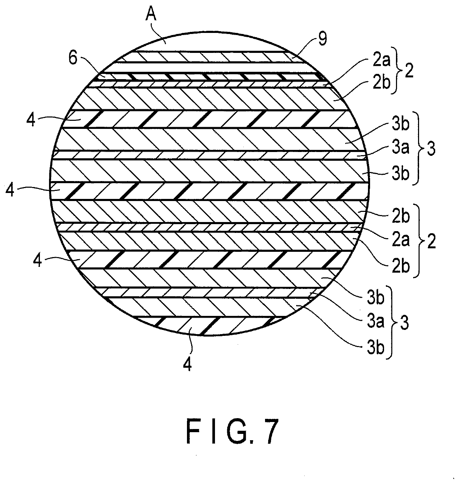

FIG. 6 is a schematic cross-sectional view of an example of a flat battery according to the embodiment. FIG. 7 is an enlarged cross-sectional view of section A in FIG. 6.

A battery 10 shown in FIG. 6 and FIG. 7 includes an electrode group 1 of a flat and wound form shown in FIG. 6. The electrode group 1 is an example of the electrode group according to the first embodiment. The electrode group 1 is housed in a bag-form container member 9 made of a laminate film including a metal layer and two resin layers sandwiching the metal layer therebetween.

As shown in FIG. 7, the electrode group 1 includes: a wound body formed by spirally winding a stack where stacked, in order from the outside, are a negative electrode 2, a separator 4, a positive electrode 3, and a separator 4, and then forming the wound stack into a flat shape by press-forming; and a fixing tape 6 wrapped around the outer periphery of the wound body to serve as a winding affixation. At a portion within the negative electrode 2 that is located outermost, a negative electrode active material-containing layer 2b is formed on one face on the internal surface side of a negative electrode current collector 2a, as shown in FIG. 7. For the other portions of the negative electrode 2, negative electrode active material-containing layers 2b are formed on both surfaces of the negative electrode current collector 2a. For the positive electrode 3, positive electrode active material-containing layers 3b are formed on both surfaces of a positive electrode current collector 3a.

In vicinity of the outer peripheral edge of the wound electrode group 1, a negative electrode terminal 17 is connected to the negative electrode current collector 2a at the outermost portion of the negative electrode 2, and a positive electrode terminal 18 is connected to the positive electrode current collector 3a of the positive electrode 3 located on the inner side. The negative electrode terminal 17 and positive electrode terminal 18 are extended out from an opening of the container member 9.

The battery 10 shown in FIG. 6 and FIG. 7 further includes an electrolyte that is not illustrated. The electrolyte is housed within the container member 9 in a state of being impregnated into the electrode group 1.

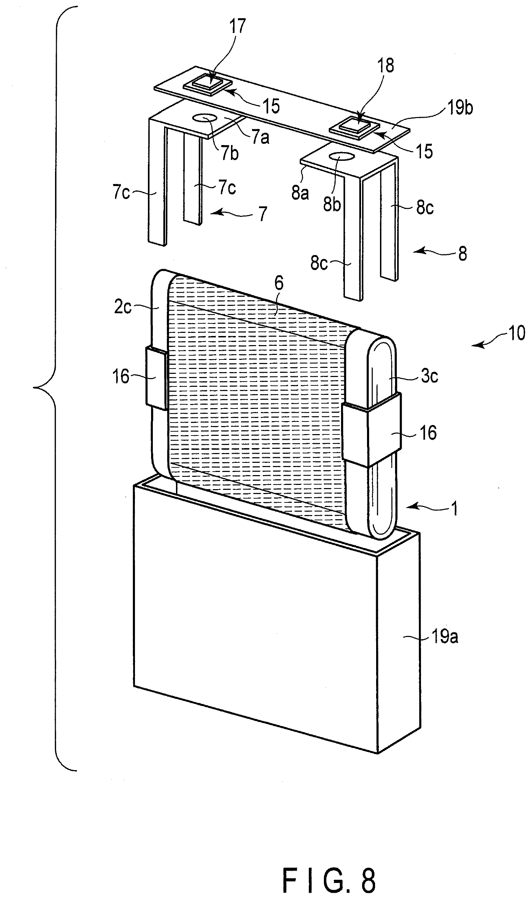

Aspects of battery according to the embodiment are not limited to that shown in FIGS. 6 and 7. Another example is described with reference to FIG. 8.

FIG. 8 is an exploded perspective view schematically showing another example of the battery according to the embodiment.

A battery 10 includes: a prismatic container member configured of a metal container 19a made of metal and having an opening and a sealing plate 19; a flat wound electrode group 1 housed in the metal container 19a; and an electrolyte (not shown) housed in the metal container 19a and impregnated in the electrode group 1. The sealing plate 19b is welded onto the opening of the metal container 19a.

The wound electrode group 1 includes a band-shaped positive electrode having a pair of long sides and a band-shaped negative electrode having a pair of long sides. In a manner similar to the electrode group 1 in the battery described with reference to FIGS. 6 and 7, the positive electrode (3) and the negative electrode (2) are wound with the band-shaped separator (4) having a pair of long sides interposed therebetween. The positive electrode, the negative electrode, and the separator are wound with the directions of the long sides thereof matching one another.

The positive electrode (3) includes a positive electrode current collector (3a) and positive electrode active material-containing layer (s) (3b) supported on the surface (s) thereof. The positive electrode current collector includes a positive electrode current collecting tab 3c corresponding to a band-shaped portion in which the positive electrode active material-containing layer(s) is not supported on a surface thereof.

The negative electrode (2) includes a negative electrode current collector (2a) and negative electrode active material-containing layer (s) (2b) supported on the surface (s) thereof. The negative electrode current collector includes a negative electrode current collecting tab 2c corresponding to a band-shaped portion in which the negative electrode active material-containing layer(s) is not supported on a surface thereof. In the electrode group 1, the positive electrode current collecting tab 3c wound spirally protrudes from one end face, and the negative electrode current collecting tab 2c wound spirally protrudes from the other end face, as shown in FIG. 8.

As shown in FIG. 8, the electrode group 1 includes two clasping members 16. A part of each of the positive electrode current collecting tab 3c and the negative electrode current collecting tab 2c is held by the clasping members 16.

Of the outermost periphery of the electrode group 1, the portion excluding the positive electrode current collecting tab 3c and the negative electrode current collecting tab 2c is covered with a fixing tape 6.

The sealing plate 19b has a rectangular shape. The sealing plate 19b has two through-holes, which are not illustrated. An inlet (not illustrated) for putting in, for example, a liquid electrolyte is further opened in the sealing plate 19b. After the electrolyte is put in, the inlet is sealed by a sealing lid (not illustrated).

The battery shown in FIG. 8 further includes a positive electrode lead 8, a positive electrode terminal 18, a negative electrode lead 7, and a negative electrode terminal 17.

The positive electrode lead 8 includes a connection plate 8a for electrically connecting to the positive electrode terminal 18, a through-hole 8b opened in the connection plate 8a, and strip-shaped current collecting parts 8c branched out in two prongs from the connection plate 8a and extending downward. The two current collecting parts 8c of the positive electrode lead 8 holds the clasping member 16 that holds the positive electrode current collecting tab 3c therebetween, and are electrically connected to the clasping member 16 by welding.

The negative electrode lead 7 includes a connection plate 7a for electrically connecting to the negative electrode terminal 17, a through-hole 7b opened in the connection plate 7a, and strip-shaped current collecting parts 7c branched out in two prongs from the connection plate 7a and extending downward. The two current collecting parts 7c of the negative electrode lead 7 holds the clasping member 16 that holds the negative electrode current collecting tab 2c therebetween, and are electrically connected to the negative electrode current collecting tab 2c by welding.

Methods for electrically connecting the positive electrode lead 8 and the negative electrode lead 7 to the positive electrode current collecting tab 3c and the negative electrode current collecting tab 2c, respectively, include, but are not particularly limited to, welding such as ultrasonic welding or laser welding.

The positive electrode terminal 18 and the positive electrode lead 8 are fixed to the sealing plate 19b by swaging via an external insulating member 15 and an internal insulating member that is not shown. With such an arrangement, the positive electrode terminal 18 and the positive electrode lead 8 are electrically connected to each other and electrically insulated from the sealing plate 19b. The negative electrode terminal 17 and the negative electrode lead 7 are fixed to the sealing plate 19b by swaging via the external insulating member 15 and an internal insulating member that is not shown. With such an arrangement, the negative electrode terminal 17 and the negative electrode lead 7 are electrically connected to each other and electrically insulated from the sealing plate 19b.

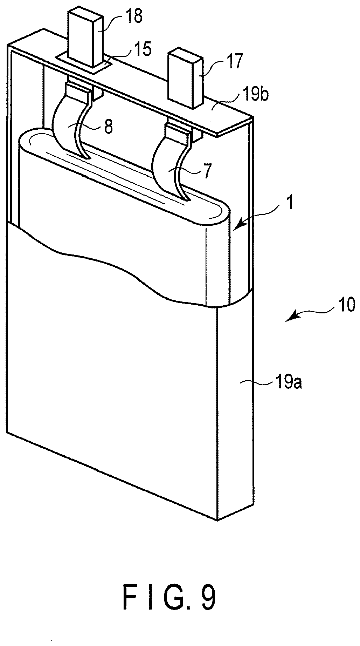

Still another example will be described with reference to FIG. 9. FIG. 9 is a partially cutaway perspective view schematically showing a battery of still another example according to the embodiment.

The battery 10 shown in FIG. 9 differs from the example shown in FIG. 8 in that the positive electrode lead 8 and the negative electrode lead 7 extend in the same direction from the same end face of the electrode group 1.

Similarly to the electrode group 1 described with reference to FIGS. 6 to 8, the flat electrode group 1 includes a wound body including a negative electrode, a positive electrode, and a separator, and a fixing tape. All of the electrode groups 1 shown in each of FIGS. 6 to 9 has a flat structure including a wound body having a flat wound structure and a fixing tape.

In the battery 10 shown in FIG. 9, such an electrode group 1 is housed in a metal container 19a. The metal container 19a further houses an electrolyte, which is not shown. At least a part of the electrolyte is held by the electrode group 1. The metal container 19a is sealed by a sealing plate 19b made of metal. The metal container 19a and the sealing plate 19b constitute, for example, an outer can as a container member.

One end of the negative electrode lead 7 is electrically connected to the negative electrode current collector, and the other end is electrically connected to the negative electrode terminal 17. One end of the positive electrode lead 8 is electrically connected to the positive electrode current collector, and the other end is electrically connected to a positive electrode terminal 18 fixed to the sealing plate 19b. The positive electrode terminal 18 is fixed to the sealing plate 19b via an external insulating member 15. The positive electrode terminal 18 and the sealing plate 19b are electrically insulated from each other by the external insulating member 15.

The battery according to the second embodiment includes the electrode group according to the first embodiment. Therefore, the battery exhibits a high capacity and high vibration resistance.


[Third Embodiment]


According to a third embodiment, a battery pack is provided. This battery pack includes the battery according to the second embodiment.

The battery pack according to the embodiment may include plural batteries. The plural batteries may be electrically connected in series or electrically connected in parallel. Alternatively, the plural batteries may be connected in a combination of in-series and in-parallel.

For example, the battery pack may be provided with five nonaqueous electrolyte batteries according to the second embodiment. These batteries may be connected in series. The batteries connected in series may be configured into a battery module. That is, the battery pack according to the embodiment may include a battery module, as well.

The battery pack according to the embodiment may include plural battery modules. The plural battery modules may be electrically connected in series, in parallel, or in combination of in-series and in-parallel.

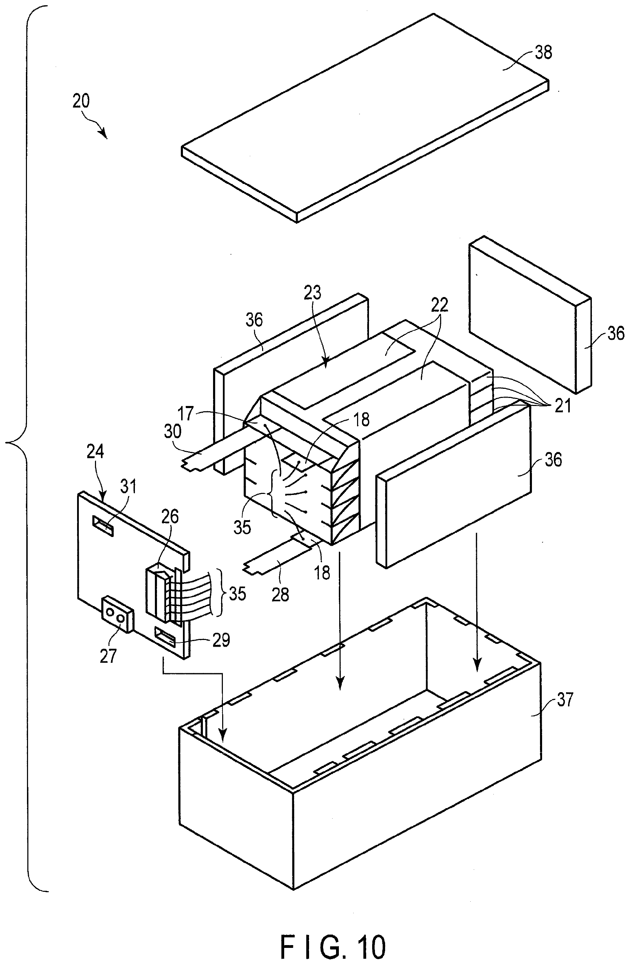

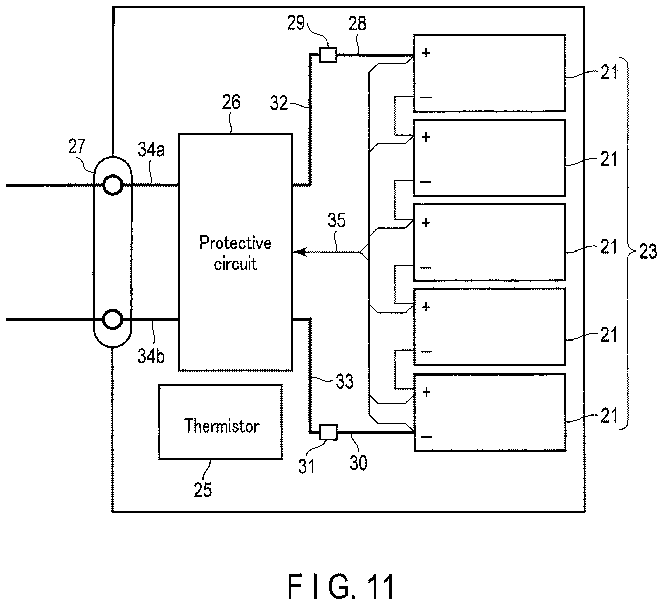

An example of the battery pack according to the embodiment will be described in detail with reference to FIGS. 10 and 11. As a single-battery, for example, the flat battery shown in FIG. 15 may be used.

FIG. 10 is an exploded perspective view schematically showing an example of the battery pack according to the embodiment. FIG. 11 is a block diagram showing an example of an electric circuit of the battery pack shown in FIG. 10.

The plural single-batteries 21 configured of the aforementioned flat batteries are stacked in such manner that the externally extending negative electrode terminals 17 and positive electrode terminals 18 are aligned in the same direction, and are fastened with an adhesive tape 22 to configure a battery module 23. These single-batteries 21 are electrically connected in series to each other as shown in FIG. 11.

A printed wiring board 24 is disposed facing the side surface of the single-battery 21 from which the negative electrode terminals 17 and the positive electrode terminals 18 extend. As shown in FIG. 11, mounted on the printed wiring board 24 are a thermistor 25, a protective circuit 26, and an external power distribution terminal 27. Note that an insulating plate (not shown) is attached to the surface of the printed wiring board 24 facing the battery module 23 so as to avoid unnecessary connection with the wiring of the battery module 23.

A positive electrode-side lead 28 is connected to the positive electrode terminal 18 located lowermost in the battery module 23, and a distal end thereof is inserted into a positive electrode-side connector 29 of the printed wiring board 24 and electrically connected thereto. A negative electrode-side lead 30 is connected to the negative electrode terminal 17 located uppermost in the battery module 23, and a distal end thereof is inserted into the negative electrode-side connector 31 of the printed wiring board 24 and electrically connected thereto. These connectors 29 and 31 are connected to the protective circuit 26 through wiring 32 and wiring 33 formed on the printed wiring board 24.

The thermistor 25 detects the temperature of the single-batteries 21, and the detection signal is transmitted to the protective circuit 26. The protective circuit 26 can shut off a plus-side wiring 34a and a minus-side wiring 34b between the protective circuit 26 and the external power distribution terminal 27 under a predetermined condition. A predetermined condition is, for example, when the temperature detected by the thermistor 25 becomes a predetermined temperature or higher. The predetermined condition is also when overcharge, over-discharge, overcurrent, or the like of the single-battery(s) 21 is detected. Detection of this overcharge or the like is performed for each of the individual single-batteries 21 or the entire battery module 23. In the case of detecting each single-battery 21, a battery voltage may be detected, or a positive electrode potential or a negative electrode potential may be detected. In the latter case, a lithium electrode used as a reference electrode is inserted into each single-battery 21. In the case of FIG. 10 and FIG. 11, wiring 35 for voltage detection is connected to each of the single-batteries 21. Detection signals are transmitted to the protective circuit 26 through the wirings 35.

Protective sheets 36 made of rubber or resin are respectively arranged on three side surfaces of the battery module 23 excluding the side surface from which the positive electrode terminal 18 and the negative electrode terminal 17 protrude.

The battery module 23 is housed in a housing container 37 together with each protective sheet 36 and the printed wiring board 24. That is, the protective sheets 36 are disposed in the housing container 37 respectively on both inner side surfaces along a long-side direction and the inner side surface along a short-side direction, and the printed wiring board 24 is disposed on the inner side surface at the opposite side along the short-side direction. The battery module 23 is located in a space surrounded by the protective sheets 36 and the printed wiring board 24. A lid 38 is attached to the upper surface of the housing container 37.

For fixing the battery module 23, a thermal shrinkage tape may be used in place of the adhesive tape 22 . In this case, the protective sheets are disposed on each side surface of the battery module, a thermal shrinkage tape is wound, and thereafter, the thermal shrinkage tape is thermally shrunk to bind the battery module.

In FIGS. 10 and 11, an aspect where the single-batteries 21 are connected in series was shown; however, the connection may be made in parallel in order to increase the battery capacity. Assembled battery packs may also be connected in series and/or parallel.

The battery pack according to the third embodiment includes the battery according to the second embodiment. Therefore, high capacity and high vibration resistance are exhibited.

[Examples]

Hereinafter, the above-described embodiment will be described in more detail based on examples.

(Example 1)

Lithium-containing nickel cobalt manganese oxide $LiNi_{0.5}Co_{0.2}Mn_{0.3}O_2$ (NCM) and lithium cobalt oxide $LiCoO_2$ (LCO) were prepared. The NCM and the LCO were mixed at a mass ratio of NCM : LCO = 80 : 20 and used as positive electrode active material. Acetylene black (AB) and graphite were prepared as electro-conductive agents. Polyvinylidene fluoride (PVdF) was prepared as a binder. 91% by mass of the positive electrode active material (NCM-LCO mixture), 2.5% by mass of AB, 3% by mass of graphite, and 3.5% by mass of PVdF were put into N-methylpyrrolidone (NMP) and mixed to prepare a slurry. This slurry was applied onto both surfaces of a current collector made of a band-shaped aluminum foil having a thickness of 12 um, and the coating film was dried. The slurry was applied at a weight per unit area of 70 g/m$^2$ per face of the current collector. The dried coating was then pressed to a density of 3.1 g/cm$^3$ (excluding current collector). In this manner, a positive electrode active material-containing layer was formed on the current collector to obtain a positive electrode. The thickness of the produced positive electrode was 57 $\mu$m.

Lithium titanate $Li_4Ti_5O_{12}$ having a spinel-structure was prepared as a negative electrode active material. AB and graphite were prepared as electro-conductive agents. PVdF was prepared as a binder. 85% by mass of the negative electrode active material, 3% by mass of AB, 5% by mass of graphite, and 7% by mass of PVdF were put into NMP and mixed to prepare a slurry. This slurry was applied to both surfaces of a current collector made of a band-shaped aluminum foil having a thickness of 12 um, and the coating film was dried. The slurry was applied at a weight per unit area of 63 g/m$^2$ per face of the current collector. The dried coating was then pressed to a density of 2.2 g/cm$^3$ (excluding current collector) . In this manner, a negative electrode active material-containing layer was formed on the current collector to obtain a negative electrode. The thickness of the produced negative electrode was 69 $\mu$m.

The positive electrode and the negative electrode were cut to adjust their dimensions so that the short side length (length $W_N$ in the first direction) of the negative electrode active material-containing layer was 1.6 mm wider than the short side length (length $W_P$ in the first direction) of the positive electrode active material-containing layer.

As a separator, an A-type separator having the configuration shown in Table 1 was prepared. This A-type separator was a composite separator composed of a substrate made of polyethylene terephthalate (PET) fibers that swell when impregnated with an organic solvent and a cellulose nonwoven fabric.

The positive electrode, the negative electrode, and the separator were stacked in the order of "positive electrode-separator-negative electrode-separator". When these members were stacked, the arrangement of the positive electrode and the negative electrode was adjusted so that the protrusion length W of the non-facing portion of the negative electrode active material-containing layer not facing the positive electrode active material-containing layer protruding from the end of the positive electrode active material-containing layer, that is, the clearance between the positive electrode and the negative electrode, was 0.8 mm on both sides in the short side direction of the positive and negative electrodes. The obtained stack was spirally wound so that the negative electrode was located at both the innermost periphery and the outermost periphery, and pressed into a flat shape to prepare a wound body (electrode coil) . The number of windings was 50 turns based on the negative electrode at the innermost periphery.

A fixing tape containing polypropylene as a substrate was prepared as a winding affixation tape. The fixing tape was wound around the outer periphery of the wound body so that the fixing tape covered the outermost negative electrode active material-containing layer.

In this manner, an electrode group was produced.

(Examples 2 and 3)

An electrode group was produced by the same procedure as in Example 1 except that the dimensions of the positive electrode were adjusted so that the protruding width W (clearance) of the non-facing portion of the negative electrode active material-containing layer protruding from both end portions of the positive electrode active material-containing layer was the value shown in Table 2 below.

(Examples 4 to 6)

An electrode group was produced by the same procedure as in Example 1 except that the weight per unit area of the slurry applied per surface of the current collector was increased for one or both of the positive electrode and the negative electrode, so as to adjust the thicknesses of the positive and negative electrodes to the values shown in Table 2 below.

(Comparative Examples 1 and 2)

An electrode group was produced by the same procedure as in Example 1 except that the dimensions of the positive electrode were adjusted so that the protruding width W (clearance) of the non-facing portion of the negative electrode active material-containing layer protruding from both end portions of the positive electrode active material-containing layer was the value shown in Table 2 below.

(Comparative Example 3)

As a separator, a B-type separator having the configuration shown in Table 3 was prepared. This B-type separator was a cellulose nonwoven fabric that did not swell even when impregnated with an organic solvent.

(Comparative Examples 4 and 5)

An electrode group was produced by the same procedure as in Example 1 except that the weight per unit area of the slurry applied per surface of the current collector was reduced for one or both of the positive electrode and the negative electrode, so as to adjust the thicknesses of the positive and negative electrodes to the values shown in Table 2 below.

(Comparative Examples 6 to 8)

An electrode group was produced by the same procedure as in Example 1 except that the dimensions of the positive electrode were adjusted so that the protrusion width W (clearance) of the non-facing portion of the negative electrode active material-containing layer protruding from both end portions of the positive electrode active material-containing layer was the value shown in Table 2 below, and the weight per unit area per surface of the slurry applied onto the current collector of each of the positive electrode and the negative electrode was reduced to adjust the thickness of each of the positive electrode and the negative electrode to the value shown in Table 2 below.

<Measurement of Thickness T of Electrode Group>

For each of the electrode groups produced in Examples 1 to 6 and Comparative Examples 1 to 8, the swollen-state thickness Ts in a state of being impregnated with propylene carbonate (PC) and the dry-state thickness $T_D$ were measured by the methods described above. Based on the measurement results, with respect to the thickness T of the electrode group, the ratio $T_S/T_D$ of the swollen-state thickness $T_S$ to the dry-state thickness $T_D$ was calculated. The calculation results are shown in Table 2 below.

<Evaluation>

(Discharge Capacity Measurement)

The discharge capacity of each of the electrode groups produced in Examples 1 to 6 and Comparative Examples 1 to 8 was measured as follows.
Each electrode group was sealed inside an outer can made of aluminum to prepare a cell. The produced cell was placed in a dryer and vacuum dried at 95 °C for 6 hours. After drying, the cell was transferred to a glove box controlled at a dew point of -50°C or lower.

Methyl ethyl carbonate (MEC) and propylene carbonate (PC) were mixed in a volume ratio of 2 : 1. Lithium hexafluorophosphate ($LiPF_6$) was dissolved in the obtained mixed solution at a concentration of 1 mol/L to prepare a liquid nonaqueous electrolyte solution.

The liquid nonaqueous electrolyte was put into the outer can. The outer can containing the nonaqueous electrolyte was sealed under a reduced pressure environment of -90 kPa.

After putting in the nonaqueous electrolyte, the cell was subjected to an initial charging at 1C to an SOC (state of charge) of 20%, and 24 h aging was performed in a thermostatic bath at 70 °C. After the aging, the can was opened, and then sealed again under a reduced pressure environment of -90 kPa to produce a nonaqueous electrolyte battery.

The discharge capacity of the produced nonaqueous electrolyte battery was measured in a voltage range of 1.8 V to 2.8 V in an environment at 25°C. When charging, CCCV (constant current-constant voltage) charging, in which constant current charging is performed at a current value of 20 A until the battery voltage reaches 2.8 V, then constant voltage charging is performed at 2.8 V, and charging is terminated when the charging current value reaches 1 A, was performed. After a full charge by CCCV, discharge was performed to 1.8 V at a current value of 20 A, and the value of the electric capacity discharged at this time was defined as the discharge capacity.

(Vibration Test)

Each of the electrode groups produced in Examples 1 to 6 and Comparative Examples 1 to 8 was subjected to a vibration test as follows to evaluate durability performance.

The vibration test was performed under conditions conforming to the T3 test conditions of the UN Recommendation Test UN3480 of the UN Manual of Tests and Criteria.

The details and evaluation results of the electrode groups produced in Examples 1 to 6 and Comparative Examples 1 to 8 are summarized in Table 2 below. Specifically, as the details of the electrode group, the positive electrode thickness, the negative electrode thickness, the type of the separator, the ratio $T_S/T_D$ of the swollen-state thickness $T_S$ to the dry-state thickness $T_D$, and the protrusion width W (common to both sides) of the non-supported portion of the negative electrode active material-containing layer are shown. As the evaluation results, the discharge capacity and the vibration test results are shown.

[Table 2]

| [Table 2] | Positive electrode thickness [$\mu$m] | Negative electrode thickness [$\mu$m] | Separator | $T_S/T_D$ | Projection width W [mm] | Discharge Capacity [Ah] | Vibration test results |
|---|---|---|---|---|---|---|---|
| Example 1 | 57 | 69 | A-Type | 1.018 | 0.8 | 21.8 | No short circuit |
| Example 2 | 57 | 69 | A-Type | 1.018 | 0.5 | 22.0 | No short circuit |
| Example 3 | 57 | 69 | A-Type | 1.018 | 1 | 21.7 | No short circuit |
| Example 4 | 57 | 71 | A-Type | 1.016 | 0.8 | 22.1 | No short circuit |
| Example 5 | 59 | 72 | A-Type | 1.014 | 0.8 | 22.4 | No short circuit |
| Example 6 | 60 | 75 | A-Type | 1.012 | 0.8 | 22.7 | No short circuit |
| Comparative Example 1 | 57 | 69 | A-Type | 1.018 | 1.2 | 21.5 | No short circuit |
| Comparative Example 2 | 57 | 69 | A-Type | 1.018 | 0.3 | 22.1 | Short-circuit |
| Comparative Example 3 | 57 | 69 | B-Type | 1 | 0.8 | 21.8 | Short-circuit |

(continued)

| [Table 2] | Positive electrode thickness [μm] | Negative electrode thickness [μm] | Separator | $T_S/T_D$ | Projection width W [mm] | Discharge Capacity [Ah] | Vibration test results |
|---|---|---|---|---|---|---|---|
| Comparative Example 4 | 51 | 54 | A-Type | 1.03 | 0.8 | 18.9 | No short circuit |
| Comparative Example 5 | 51 | 58 | A-Type | 1.026 | 0.8 | 20.0 | No short circuit |
| Comparative Example 6 | 57 | 70 | A-Type | 1.019 | 1.2 | 21.2 | No short circuit |
| Comparative Example 7 | 57 | 70 | A-Type | 1.019 | 0.3 | 22.0 | Short-circuit |
| Comparative Example 8 | 62 | 77 | A-Type | 1.012 | 0.3 | 23.0 | Short-circuit |

As shown in Table 2, all of the electrode groups produced in Examples 1 to 6 had not undergone short-circuiting in the vibration test, showing good vibration resistance. In addition, the electrode groups of Examples 1 to 6 exhibited favorable discharge capacity. In any of the electrode groups of Examples 1 to 6, the ratio $T_S/T_D$ of the swollen-state thickness $T_S$ to the dry-state thickness $T_D$ satisfied the relationship of $1.01 < T_S/T_D < 1.02$, and the protrusion width W (clearance) that the negative electrode active material-containing layer protruded from both sides of the positive electrode active material-containing layer was within the range of 0.4 mm to 1 mm.

In the electrode groups produced in Comparative Examples 1 and 4 to 6, short-circuiting did not occur, but the discharge capacity was low. In Comparative Examples 1 and 6, it can be seen that the facing area between the positive electrode active material-containing layer and the negative electrode active material-containing layer was reduced in order to increase the clearance between the positive electrode and the negative electrode (the protruding width W of the non-supported portion of the negative electrode active material-containing layer), and as a result, the portion of the electrode group that can contribute to charge and discharge had diminished whereby the discharge capacity had been reduced. In Comparative Examples 4 and 5, it can be seen that, as a result of increasing the proportion of the separator in the electrode group so as to increase the ratio $T_S/T_D$ of the swollen-state thickness Ts to the dry-state thickness $T_D$ in order to increase the effect of tightening the wound body due to swelling of the separator, the positive and negative electrodes contributing to charge and discharge had diminished and the discharge capacity had been reduced.

In the electrode groups produced in Comparative Examples 2, 3, 7, and 8, a short circuit occurred during the vibration test. In Comparative Examples 2, 7, and 8, it can be seen that the short circuit occurred because the clearance between the positive and the negative electrodes (the protruding width W of the non-supported portion of the negative electrode active material-containing layer) was too small. In Comparative Example 3, it can be seen that the ratio $T_S/T_D$ of the swollen-state thickness Ts to the dry-state thickness $T_D$ was 1 due to the use of the non-swelling separator (Type-B shown in Table 1), and the effect of tightening the wound body was not obtained, and as a result, the vibration resistance was not enhanced.

According to at least one example and embodiment described above, provided is an electrode group including a wound body having a wound structure of flat shape and a fixing tape. The electrode group has a flat structure including a flat portion. The wound body is configured by winding a stack with a winding number of 50 turns or more so that a center of the wound body is positioned along a first direction, where the stack includes a positive electrode that includes a positive electrode active material-containing layer, a negative electrode that includes a negative electrode active material-containing layer, and a separator. The fixing tape is wound once or more around the wound body. A thickness T of the flat structure in a second direction intersecting a principal surface in the flat portion of the wound structure of flat shape satisfies, when taking a thickness in the second direction in a state of being impregnated with propylene carbonate to be a swollen-thickness $T_S$ and a thickness in the second direction in a dry state to be a dry thickness $T_D$, a relationship of $1.01 < T_S/T_D < 1.02$. At both ends in the first direction the wound body, one of the positive electrode active material-containing layer and the negative electrode active material-containing layer protrudes from an end of the other by a protrusion width W within a range of 0.4 mm or more and 1 mm or less. According to the electrode having the above configuration, a battery and battery pack with high capacity and high vibration resistance can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An electrode group comprising:

   a wound body having a wound structure of a flat shape configured of a stack wound with a winding number of 50 turns or more so that a center of the wound body is positioned along a first direction, the stack including a positive electrode that includes a positive electrode active material-containing layer, a negative electrode that includes a negative electrode active material-containing layer, and a separator; and
   a fixing tape wound one lap or more around an outer periphery of the wound body,
   the electrode group having a flat structure that includes a flat portion,
   a thickness T of the flat structure in a second direction intersecting a principal surface in the flat portion satisfying a relationship of $1.01 < T_S/T_D < 1.02$, where a thickness in the second direction in a state of being impregnated with propylene carbonate is a swollen-state thickness $T_S$, and a thickness in the second direction in a dry state is a dry thickness $T_D$, and
   at both ends in the first direction, one of the positive electrode active material-containing layer and the negative electrode active material-containing layer protrudes from an end of the other by a protrusion width W within a range of 0.4 mm or more and 1 mm or less.

2. The electrode group according to claim 1,
   wherein the separator is a composite that includes a substrate containing polyethylene terephthalate fibers and a cellulose nonwoven fabric.

3. The electrode group according to claim 1 or 2,
   wherein the separator has a thickness of 15 $\mu$m or less in a dry state.

4. The electrode group according to any one of claims 1 to 3,
   wherein the positive electrode has a thickness of 80 $\mu$m or less, and the negative electrode has a thickness of 80 $\mu$m or less.

5. The electrode group according to any one of claims 1 to 4,
   wherein the negative electrode active material-containing layer contains a lithium titanium oxide having a spinel structure.

6. A battery comprising:

   the electrode group according to any one of claims 1 to 5; and
   an electrolyte.

7. A battery pack comprising:
   the battery according to claim 6.

F I G. 1

F I G. 2

EP 4 358 224 A1

FIG. 3

FIG. 4

25

F I G. 5

F I G. 6

# F I G. 7

FIG. 8

F I G. 9

20

38

23
36
22
36
17
30
18
21
36
24
31
26
35
27
35
18
28
29
37

F I G. 10

F I G. 11

| | INTERNATIONAL SEARCH REPORT | International application No. |
|---|---|---|
| | | PCT/JP2021/023248 |

**A. CLASSIFICATION OF SUBJECT MATTER**
H01M 10/0587(2010.01)i; H01M 4/13(2010.01)i; H01M 4/485(2010.01)i; H01M 50/414(2021.01)i; H01M 50/429(2021.01)i; H01M 50/44(2021.01)i; H01M 50/449(2021.01)i; H01M 50/489(2021.01)i
FI:     H01M10/0587;   H01M4/13;   H01M4/485;   H01M50/414;   H01M50/429;         H01M50/44; H01M50/449; H01M50/489

According to International Patent Classification (IPC) or to both national classification and IPC

**B. FIELDS SEARCHED**

Minimum documentation searched (classification system followed by classification symbols)
H01M10/0587;   H01M4/13;   H01M4/485;   H01M50/414;   H01M50/429;   H01M50/44; H01M50/449; H01M50/489

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/187130 A1 (TOSHIBA KK) 03 October 2019 (2019-10-03) | 1-7 |
| A | JP 2015-32478 A (TOYOTA MOTOR CORP) 16 February 2015 (2015-02-16) | 1-7 |
| A | JP 2014-167890 A (TOSHIBA CORP) 11 September 2014 (2014-09-11) | 1-7 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 August 2021 (25.08.2021) | 07 September 2021 (07.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/023248

| Patent Documents referred in the Report | Publication Date | Patent Family | Publication Date |
|---|---|---|---|
| WO 2019/187130 A1 | 03 Oct. 2019 | (Family: none) | |
| JP 2015-32478 A | 16 Feb. 2015 | US 2016/0181619 A1 WO 2015/015274 A1 CN 105453315 A | |
| JP 2014-167890 A | 11 Sep. 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019187130 A